# EUROPÄISCHE PATENTSCHRIFT

(11) **EP 0 476 286 B1**
(45) Veröffentlichungstag und Bekanntmachung des Hinweises auf die Patenterteilung: **05.10.1994**
(21) Anmeldenummer: 91113082.1
(22) Anmeldetag: 03.08.1991
(51) Int. Cl.: F02B 77/13, B60R 13/08

(54) **Kapselung der Verbrennungskraftmaschine in einem Nutzfahrzeug**
Encapsulation for an internal combustion engine in a vehicle
Enveloppe pour un moteur à combustion interne pour un véhicule

(30) Priorität: 10.09.1990 DE 4028693 U
(43) Veröffentlichungstag der Anmeldung: 25.03.1992
(73) Patentinhaber: MAN Nutzfahrzeuge Aktiengesellschaft, 80976 München (DE)
(72) Erfinder: Feitzelmayer, Karl, Dipl.-Ing., D-8031 Gröbenzell (DE); Drewitz, Hans, Dipl.-Ing., D-8000 München 40 (DE); Stiglmaier, Manfred, Dipl.-Ing., D-8031 Gilching (DE)

(56) Entgegenhaltungen:
- EP-A- 0 074 941
- DE-A- 2 801 339
- DE-A- 3 835 809
- FR-A- 2 314 088
- FR-A- 2 318 050
- US-A- 3 882 951

## Beschreibung

Die Erfindung bezieht sich auf eine Kapselung der Verbrennungskraftmaschine in einem Nutzfahrzeug.

Es sind verschiedene Kapselsysteme bekannt. Das in praxi gängige System ist die sogenannte Rahmenkapsel. Diese ist eine voll belüftete Kapsel nach dem Prinzip der "offenen Rohre". Hierbei sind Kühler, Lüfter, Motor, Getriebe und alle Nebenaggregate in der Kapsel angeordnet.

Weiterhin ist die teilbelüftete Kapsel bekannt. Auch hier sind Motor, Getriebe und alle Nebenaggregate sowie alle Gummiteile in der Kapsel angeordnet. Der Kühler und der Lüfter befinden sich aber außerhalb der Kapsel. Ein Teilluft-Strom oder ein separater Lüfter mit Ansaugluft-Dämpfungsschacht sorgt hier für die Kühlung der Teile in der Kapsel.
Eine weitere bekannte Kapselanordnung ist die geschlossene Kapsel nach Patent EP 0252 178 wovon der gemeinsame Oberbegriff der Ansprüche 1 und 2 ansgeht. Diese Kapsel umschließt nur den Rumpfmotor. Alle Nebenaggregate, Bedienteile, Gummiteile und das Getriebe sind außerhalb der Kapsel angeordnet.

Der Erfindung liegt die Aufgabe zugrunde, ein Kapselsystem mit hohem Dämpfungswirkungsgrad und zugleich guter Zugänglichkeit zu den Motorteilen zu schaffen.

Dies wird erfindungsgemäß durch die kennzeichnenden Merkmale der Ansprüche 1 und 2 erreicht.

Solcherart entsteht eine Zweisystem-Kapsel, die im unteren Teil als geschlossene Motorkapsel und im oberen Teil als den Motor weiträumig umgreifende Rahmenkapsel ausgebildet ist. Die Motorkapsel ist schwingungsentkoppelt und an schwingungsarmen Stellen des Motors gelagert. Alle Nebenaggregate, wie z. B. Kühler/Lüfter, Tortionsdämpfer, Anlasser, Luftpresser, Lichtmaschine, Wasserpumpe, Abgasrohr, Getriebe, Ladegruppe und Gummiteile, wie z. B. Motorlager, Keilriemen, Schläuche und Bedienungsteile, wie z. B. Schaltstange für Getriebe, Kraftstofförderpumpe mit Handhebel, sind außerhalb der Kapsel angeordnet. Da alle Nebenaggregate also außerhalb der Kapsel liegen, bedarf es keiner Kühlluft mehr. Dadurch bleibt die Kapselwirkung auch bei höheren Motorleistungen erhalten. Indem die eng an das Gehäuse der Brennkraftmaschine geführte Motorkapsel nur bis zum Kurbelgehäuseende oder bis Mitte Kurbelgehäuse vorgesehen ist, ist eine gute Zugänglichkeit zu den Motorbauteilen, wie insbesondere Ventile, gegeben. Dies ist von besonderer Bedeutung, da nunmehr Reparatur- und Wartungsarbeiten nicht mit einer aufwendigen Demontage und Wiedermontage der Kapsel verbunden sind.

Nach einer vorteilhaften Weiterbildung der Erfindung wird die Öffnung zwischen der Motorkapsel und den Rahmenlängsträgern durch Abdeckungen geschlossen. Diese Abdeckungen können z. B. Faltenbälge sein, die rahmenseitig eine metallische Verstärkung aufweisen und an der Motorkapsel eingeklipst oder verklebt werden können. Um den Motorraum nun absolut abzudichten, können die Schürzen gegen die Rahmenlängsträger wirkende Dichtlippen aufweisen. Der Schalldämpfungswirkungsgrad kann weiterhin verbessert werden, indem die Rahmenkapsel mit einem Schall-Absorptionsmaterial ausgekleidet wird. Wenn das Abgasrohr durch den Faltenbalg durchgeführt wird, muß eine Hochtemperatur-Isolierschicht auf dem Abgasrohr vorgesehen werden, die die Temperatur zwischen Balg und Isolierschicht im zulässigen Bereich hält. Wahlweise kann an der Durchführungsstelle der Balg auch unterbrochen werden. Weiterhin können auch akustisch wirksame Labyrinth-Dichtungen eingesetzt werden.

Die Erfindung ist in zwei Ausführungsbeispielen dargestellt: Es zeigen:
- Fig. 1: eine Seitenansicht des Fahrerhauses mit integrierter Kapselung für die Verbrennungsmaschine,
- Fig. 2: einen Schnitt durch die Kapselung der Verbrennungskraftmaschine,
- Fig.3: Schnitt durch eine Variante der Kapselung der Verbrennungskraftmaschine

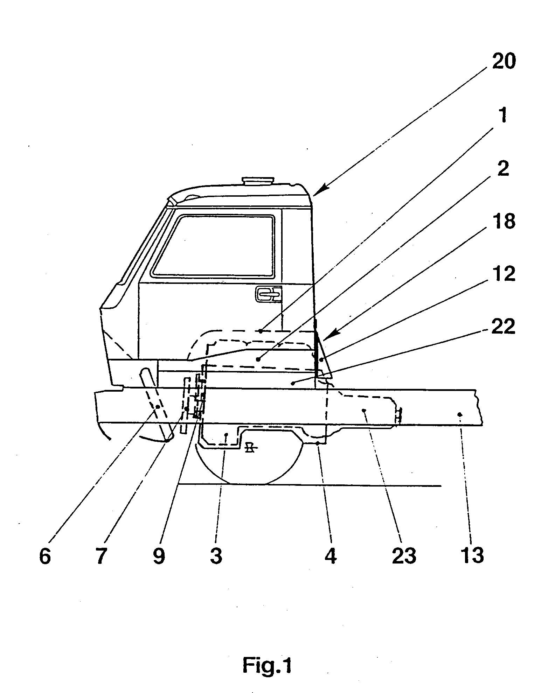

Fig. 1 zeigt eine im unteren, hinteren Bereich des Fahrerhauses 20 und zwischen den Rahmenlängsträgern 13 angeordnete Verbrennungskraftmaschine 22. Die Verbrennungskraftmaschine 22 ist von einer Zweisystem-Kapsel umschlossen. Der obere Teil, die sogenannte Rahmenkapsel 18, schließt sich an die den Rumpfmotor 3 umschließende Motorkapsel 4 an. Außerhalb der Kapsel liegen Kühler 6, Lüfter 7, Keilriemen 9 und Getriebe 23.

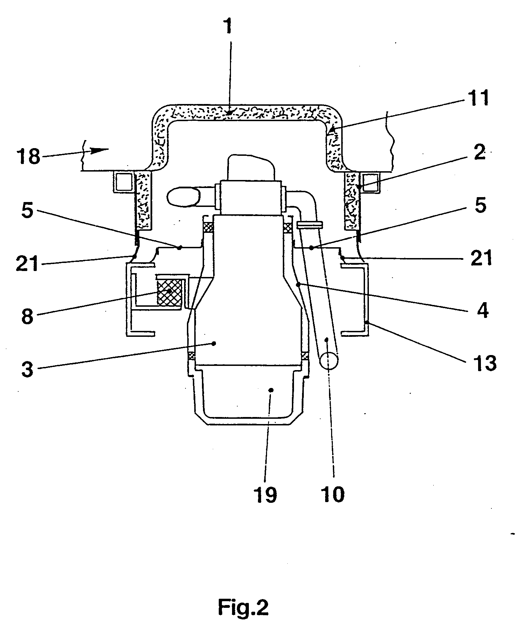

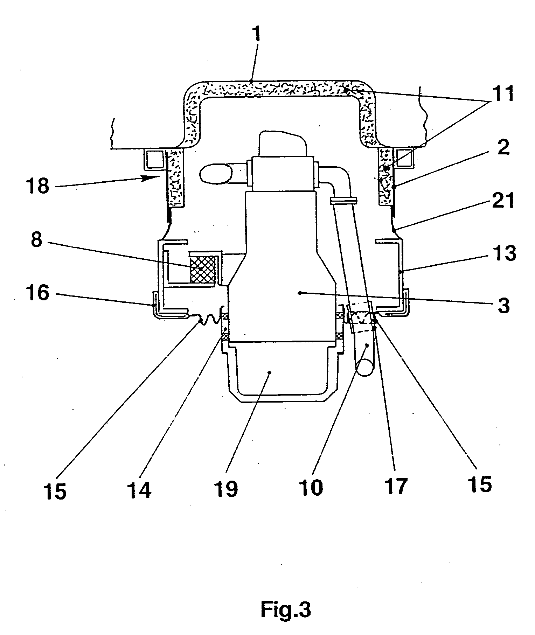

Aus den Figuren 2 und 3 ist die Gesamtkapselung der Verbrennungskraftmaschine 22 im Schnitt zu ersehen. Nach Fig. 2 wird der Rumpfmotor 3 einschließlich seiner Ölwanne 19 von der Motorkapsel 4 eng umgriffen. Die Motorkapsel ist dabei schwingungsentkoppelt an schwingungsarmen Stellen des Rumpfmotors 3 über Schwingmetallager befestigt. Die Verbrennungskraftmaschine stützt sich über Gummilager 8 gegenüber den Rahmenlängsträgern 13 ab. Die obere Hälfte der zwei System-Kapsel, die sogenannte Rahmenkapsel 18, besteht aus demaus dem Fahrerhausboden geformten Fahrerhausdom 1, den seitlichen Schürzen 2 und der hinteren Ausbuchtung 12 am Fahrerhaus 20 (siehe Fig. 1). Der untere Teil des Rumpfmotors 3 kann noch über weitere Abdeckungen 5, die mit Dichtlippen 21 am Rahmenträger 13 anliegen, weiter isoliert werden. Auch die Abdeckungen 2 weisen Dichtlippen 21 auf, die gegen die Rahmenlängsträger 13 dichten. Zur weiteren Optimierung der Dämpfung kann die Rahmenkapsel 18 mit einem Schall-Absorptionsmaterial 11 ausgekleidet werden.

Die Ausführungsvariante nach Fig. 3 unterscheidet sich von der vorhergehenden im wesentlichen dadurch, daß die Motorkapsel 14 nur etwa bis zur Höhe der Rahmenlängsträger am Rumpfmotor 3 hochgezogen ist. Die entstehenden Öffnungen zwischen Rumpfmotor 3 und Rahmenlängsträgern 13 werden durch Abdeckungen überbrückt. Diese Abdeckungen können vorzugsweise als Faltenbalgdichtungen 15 ausgebildet sein, die rahmenseitig über eine verstärkte Stahleinlage 16 mit den Rahmenlängsträgern 13 verbunden sind und motorseitig an der Motorkapsel 14 entweder zum schnellen Auswechseln angeklipst oder geklebt werden. Das Abgasrohr 10 durchgreift die Faltenbalgdichtung, und es muß aus diesem Grunde mit einer Hochtemperatur-Isolierschicht 17 versehen werden. Da bei dieser Ausführungsart die Motorkapsel 14 nur bis in Höhe der Rahmenlängsträger 13 reicht, umfaßt nunmehr die Rahmenkapsel 18 den Fahrerhausdom 1, die seitlichen Schürzen 2, die Rahmenlängsträger 13 und die hintere Ausbuchtung 12 am Fahrerhaus 20.

### Bezugszeichenliste

- 1: Fahrerhausdom
- 2: seitliche Schürzen
- 3: Rumpfmotor
- 4: Motorkapsel
- 5: Abdeckung
- 6: Kühler
- 7: Lüfter
- 8: Gummilager
- 9: Keilriemen
- 10: Abgasrohr
- 11: Schall-Absorptionsmaterial
- 12: rückseitige Ausbuchtung des Fahrerhauses
- 13: Rahmen-Längsträger
- 14: Motorkapsel
- 15: Abdeckung
- 16: Befestigung von 15
- 17: Hochtemperatur-Isolierschicht
- 18: Rahmenkapsel
- 19: Ölwanne
- 20: Fahrerhaus
- 21: Dichtlippen
- 22: Verbrennungskraftmaschine
- 23: Getriebe

## Patentansprüche

1. Kapselung einer Verbrennungskraftmaschine (22) in einem Nutzfahrzeug, mit einer am Rumpfmotor (3) elastisch gelagerten, diesen eng umgreifenden Motorkapsel (4) und einer dazu komplementär, im oberen Motorbereich angeordneten Rahmenkapsel (18), wobei alle Nebenaggregate der Verbrennungskraftmaschine (22) außerhalb der Kapselung angeordnet sind, dadurch gekennzeichnet, daß die Motorkapsel (4) den im unteren Bereich eines Fahrerhauses (20) angeordneten Rumpfmotor (3) einschließlich Ölwanne (19) bis etwa zur Oberkante Kurbelgehäuse eng umgreift und die Rahmenkapsel (18) von einem aus dem Fahrerhausboden geformten Fahrerhausdom (1), einer rückwärtigen Ausbuchtung (12) des Fahrerhauses (20) und seitlichen Schürzen (2) gebildet ist.

2. Kapselung einer Verbrennungskraftmaschine (22) in einem Nutzfahrzeug, mit einer am Rumpfmotor (3) elastisch gelagerten, diesen eng umgreifenden Motorkapsel (4) und einer dazu komplementär, im oberen Motorbereich angeordneten Rahmenkapsel (18), wobei alle Nebenaggregate der Verbrennungskraftmaschine (22) außerhalb der Kapselung angeordnet sind, dadurch gekennzeichnet, daß die Motorkapsel (14) den im unteren Bereich eines Fahrerhauses (20) angeordneten Rumpfmotor (3) einschließlich Ölwanne (19) bis an die etwa in Höhe der Motorkurbelwelle angeordneten Rahmenlängsträger (13) eng umgreift und die Rahmenkapsel (18) von einem aus dem Fahrerhausboden geformten Fahrerhausdom, einer rückwärtigen Ausbuchtung (12) des Fahrerhauses (20), den Rahmenlängsträgern (13) und seitlichen Schürzen (2) gebildet ist.

3. Kapselung nach Anspruch 2, dadurch gekennzeichnet, daß die Öffnungen zwischen der Motorkapsel (14) und den Rahmenlängsträgern (13) durch Abdeckungen (15) geschlossen sind.

4. Kapselung nach Anspruch 2 oder 3, dadurch gekennzeichnet, daß die Abdeckung (15) ein Faltenbalg ist, der an seiner rahmenseitigen Befestigung (16) metallisch verstärkt und an der Motorkapsel (14) eingeklipst oder verklebt ist.

5. Kapselung nach einem oder mehreren der Ansprüche 1 bis 4, dadurch gekennzeichnet, daß die Rahmenkapsel (18) mit einem Schall-Absorptionsmaterial (11) ausgekleidet ist.

6. Kapselung nach Anspruch 1, dadurch gekennzeichnet, daß zwischen Motorkapsel (4) und Rahmenlängsträgern (13) Abdeckungen (5) angeordnet sind.

7. Kapselung nach Anspruch 6, dadurch gekennzeichnet, daß die Abdeckungen (5) auf die Rahmenlängsträger (13) wirkende Dichtlippen (21) aufweisen.

8. Kapselung nach einem oder mehreren der Ansprüche 1 bis 7, dadurch gekennzeichnet, daß die Motorkapsel (4, 14) aus zwei in Höhe der Ölwannenoberkante trennbaren Teilen besteht.

9. Kapselung nach einem oder mehreren der Ansprüche 4, 5 oder 8, dadurch gekennzeichnet, daß ein durch den Faltenbalg (15) geführtes Abgasrohr (10) eine Hochtemperatur-Isolierschicht (17) aufweist.

10. Kapselung nach einem oder mehreren der Ansprüche 3 oder 6 bis 9, dadurch gekennzeichnet, daß als Abdeckungen (5, 15) Labyrinth-Dichtungen vorgesehen sind.

## Claims

1. A casing of an internal combustion engine (22) in a commercial vehicle, comprising an engine casing (4) flexibly mounted on and tightly enclosing the body engine (3), and a chassis casing (18) complementary to the engine casing and arranged in the upper engine region, all the auxiliary units of the internal combustion engine (22) being arranged outside the casing, characterized in that the engine casing (4) tightly encloses the body engine (3) arranged in the lower region of a driver's cab (20), including the oil sump (19), approximately up to the top edge of the crankcase, and the chassis casing (18) is formed from a driver's cab dome (1) made from the bottom of the driver's cab, a rear outward bulge (12) of the driver's cab (20) and side skirts (2).

2. A casing of an internal combustion engine (22) in a commercial vehicle, comprising an engine casing (4) flexibly mounted on and tightly enclosing the body engine (3), and a chassis casing (18) complementary to the engine casing and arranged in the upper engine region, all the auxiliary units of the internal combustion engine (22) being arranged outside the casing, characterized in that the engine casing (14) tightly encloses the body engine (3) arranged in the lower region of a driver's cab (2), including the oil sump (19), up to the chassis longitudinal members (13) arranged approximately at the height of the engine crankshaft, and the chassis casing (18) is formed from a driver's cab dome made from the bottom of the driver's cab, a rear outward bulge (12) of the driver's cab (20), the chassis longitudinal members (13) and side skirts (2).

3. A casing according to claim 2, characterized in that the openings between the engine casing (14) and the chassis longitudinal members (13) are closed by coverings (15).

4. A casing according to claim 2 or 3, characterized in that the covering (15) consists of bellows which are reinforced with metal at their attachment (16) to the chassis and are clipped or glued to the engine casing (14).

5. A casing according to one or more of claims 1 to 4, characterized in that the chassis casing (18) is lined with a sound-absorbing material (11).

6. A casing according to claim 1, characterized in that coverings (5) are arranged between the engine casing (4) and the chassis longitudinal members (13).

7. A casing according to claim 6, characterized in that the coverings (5) have sealing lips (21) acting on the chassis longitudinal members (13).

8. A casing according to one or more of claims 1 to 7, characterized in that the engine casing (4,14) consists of two parts which can be separated at the height of the top edge of the oil sump.

9. A casing according to one or more of claims 4, 5 or 8, characterized in that an exhaust pipe (10) extending through the bellows (15) has a high-temperature insulating layer (17).

10. A casing according to one or more of claims 3 or 6 to 9, characterized in that labyrinth seals are provided as coverings (5,15).

## Revendications

1. Enveloppe de moteur à combustion interne (22) pour véhicules utilitaires à moteur frontal ou avancé (3) à montage élastique, dont la capsule de moteur (4) qui entoure étroitement le moteur et une capsule de châssis (18) complémentaire, prévue dans la zone supérieure du moteur, tous les équipements du moteur à combustion interne (22) étant à l'extérieur de l'enveloppe formée par les capsules, caractérisée en ce que la capsule (4) du moteur entoure étroitement la zone inférieure du moteur frontal (3) arrivant dans la cabine (20), y compris la bâche à huile (19), sensiblement jusqu'au bord supérieur du carter de vilebrequin et la capsule de châssis (18) est constituée par un capot de cabine (1) formé en saillie du plancher de la cabine, une saillie arrière (12) de la cabine (1) et des jupes latérales (2).

2. Enveloppe d'un moteur à combustion interne (22) d'un véhicule utilitaire comportant une capsule de moteur (4) montée élastiquement sur le moteur frontal (3) en l'entourant étroitement et en complément à celle-ci, une capsule de châssis (18) prévue dans la zone supérieure du moteur, tous les accessoires du moteur à combustion interne (22) se trouvant à l'extérieur de l'enveloppe, caractérisée en ce que la capsule de moteur (14) entoure étroitement la zone inférieure du moteur frontal (3) en venant dans la cabine (2), y compris la bâche à huile (19) jusque sensiblement à la hauteur du longeron de châssis (13) prévu au niveau de l'arbre à vilebrequin, et la capsule de châssis (18) est formée par un capot de cabine venant en saillie du plancher de la cabine par une déformation arrière (12) de la cabine (20), par des longerons (13) du châssis et par des jupes latérales (2).

3. Enveloppe selon la revendication 2, caractérisée en ce que les ouvertures entre la capsule de moteur (14) et les longerons (13) du châssis sont fermées par des éléments de recouvrement (15).

4. Enveloppe selon la revendication 2 ou 3, caractérisée en ce que l'élément de recouvrement (15) est un soufflet renforcé par un moyen métallique, du côté de sa fixation (16), au châssis qui est enclipsé ou collé à la capsule (14) du moteur.

5. Enveloppe selon une ou plusieurs des revendications 1 à 4, caractérisée en ce que la capsule de châssis (18) est revêtue d'un matériau d'isolation phonique (11).

6. Enveloppe selon la revendication 1, caractérisée en ce qu'entre la capsule (4) du moteur et les longerons (13) se trouvent des éléments de recouvrement (5).

7. Enveloppe selon la revendication 6, caractérisée en ce que les éléments de revêtement (5) comportent des lèvres d'étanchéité (21) coopérant avec les longerons (13).

8. Enveloppe selon une ou plusieurs des revendications 1 à 7, caractérisée en ce que la capsule (4, 14) du moteur se compose de deux pièces qui se séparent à la hauteur de l'arête supérieure de la bâche à huile.

9. Enveloppe selon l'une ou plusieurs des revendications 4, 5 ou 8, caractérisée en ce que le tuyau d'échappement (10) qui traverse le soufflet (15) est muni d'une couche d'isolation par des températures élevées.

10. Enveloppe selon une ou plusieurs des revendications 3 ou 6 jusqu'à 9, caractérisée en ce que les éléments de recouvrement (5, 15) sont des joints de type labyrinthe.
